# EUROPÄISCHE PATENTANMELDUNG

(11) **EP 1 415 921 A1**
(43) Veröffentlichungstag der Anmeldung: **06.05.2004**
(21) Anmeldenummer: 02090367.0
(22) Anmeldetag: 04.11.2002
(51) Int. Cl.: B65B 69/00, A24B 3/00, B65G 65/23

(54) **Vorrichtung zum Greifen eines insbesondere mit Tabak befüllten Kartons**

(71) Anmelder: Hauni Maschinenbau AG, 21033 Hamburg (DE)
(72) Erfinder: Appel, Werner, 22175 Hamburg (DE)
(74) Vertreter: Patentanwälte Wenzel & Kalkoff

(57) **Zusammenfassung**

Die Erfindung befaßt sich mit einer Vorrichtung zum Greifen eines insbesondere mit Tabak befüllten Kartons (21), umfassend eine Rahmenanordnung (11), die in vertikaler Richtung auf- und abbewegbar an einer Hubsäule (12) angeordnet ist, die ihrerseits drehbar um ihre vertikale Mittelachse ausgebildet ist, wobei die Rahmenanordnung zwei einander gegenüberliegende Greifarme (18,19) aufweist, mittels der der Karton an einander gegenüberliegende Seitenflächen (22,23) greifbar ist.

Derartige Vorrichtungen dienen insbesondere zur automatisierten Handhabung von in Kartons verpacktem Tabak.

Durch die erfindungsgemäße Lösung, nämlich daß die Rahmenanordnung starr mit feststehenden Greifarmen ausgebildet ist und im Bereich mindestens eines Greifarms (18,19) mindestens ein Klemmelement (24,25) sowie eine Verstelleinheit (26,27) zur linearen Bewegung des Klemmelementes in Richtung des gegenüberliegenden Greifarms angeordnet ist, wird eine erhebliche Vereinfachung der Konstruktion erzielt, die gleichzeitig auch zur Reduzierung der Herstellkosten führt.

## Beschreibung

Die Erfindung befaßt sich mit einer Vorrichtung zum Greifen eines insbesondere mit Tabak befüllten Kartons, umfassend eine Rahmenanordnung, die in vertikaler Richtung auf- und abbewegbar an einer Hubsäule angeordnet ist, die ihrerseits drehbar um ihre vertikale Mittelachse ausgebildet ist, wobei die Rahmenanordnung zwei einander gegenüberliegende Greifarme aufweist, mittels der der Karton an einander gegenüberliegenden Seitenflächen greifbar ist.

Derartige Vorrichtungen dienen insbesondere dazu, mit Tabak befüllte Kartons von einer Lagerposition zu einer Verarbeitungsstation zu transportieren. Dazu weisen übliche Vorrichtung im wesentlichen drei Bewegungsrichtungen auf, nämlich eine Drehung der Hubsäule um die eigene Mittelachse, eine vertikale Bewegung entlang der Mittelachse sowie eine Drehung der Rahmenanordnung um eine horizontale und damit senkrecht zur Mittelachse verlaufende Achse. Ein Karton wird zum Bewegen von einer Position A zu einer Position B zwischen den Greifarmen eingeklemmt. Dazu sind die Greifarme der Rahmenanordnung über einen Schwenkmechanismus sowie entsprechende Antriebe schwenkbar ausgebildet. Um eine synchrone Betätigung der einander gegenüberliegenden Greifarme, die für ein sicheres und den zu greifenden Gegenstand schonendes Greifen erforderlich ist, zu gewährleisten, ist eine Schwenkeinheit vorgesehen, die im wesentlichen aus einer Kurvenscheibe, einem Verstellgestänge sowie Antriebsmitteln besteht.

Der Nachteil dieser bekannten Vorrichtung besteht nun zum einen darin, daß durch die komplexe Konstruktion insbesondere der Schwenkeinheit die Herstellkosten solcher Vorrichtungen erheblich sind, da die Schwenkeinheit aus diversen Einzelteilen individuell gefertigt werden muß. Zum anderen ist die Handhabung und Wartung bzw. Instandhaltung solcher bekannter Vorrichtungen aufwendig.

Der Erfindung liegt daher die Aufgabe zugrunde, eine universell einsetzbare Vorrichtung zu schaffen, die konstruktiv einfach gestaltet und damit kostengünstig ist und die die Handhabung sowie Wartung und Instandhaltung vereinfacht.

Diese Aufgabe wird durch eine Vorrichtung der eingangs genannten Art dadurch gelöst, daß die Rahmenanordnung starr mit feststehenden Greifarmen ausgebildet ist und im Bereich mindestens eines Greifarms mindestens ein Klemmelement sowie eine Verstelleinheit zur linearen Bewegung des Klemmelements in Richtung des gegenüberliegenden Greifarms angeordnet ist. Dadurch ist eine wesentliche Vereinfachung in der Konstruktion der Vorrichtung gewährleistet, die zum einen die Handhabung sowie Wartung und Instandhaltung verbessert und gleichzeitig zu einer deutlichen Reduktion der Herstellkosten derartiger Vorrichtungen führt. Durch die Vereinfachung der Konstruktion können nämlich insbesondere kostengünstige Normteile eingesetzt werden. Auch reduziert sich durch die erfindungsgemäße Vorrichtung die Anzahl der Teile. Durch die lineare Betätigung, also die Bewegung des Klemmelementes senkrecht auf die Seitenflächen des Kartons zu, ist eine sehr einfache und sichere Klemmung des Kartons gewährleistet.

In einer vorteilhaften Weiterbildung der Erfindung ist eine oder jede Verstelleinheit verschwenkbar ausgebildet. Durch die Verschwenkbarkeit der Verstelleinheit kann zusätzlich zu der linearen Bewegung (in x-Richtung) eine Bewegung (in y-Richtung) senkrecht zur linearen Bewegung erzeugt werden. Eine Überlagerung der Bewegungen führt dazu, daß zusätzlich zur Zustellbewegung der Klemmelemente in Richtung der Greifarme auch eine Relativbewegung der Klemmelemente parallel zu den Greifarmen realisierbar ist. Dadurch kann ein entleerter Karton gefaltet bzw. zusammengelegt werden, wodurch sich das Einsatzgebiet solcher Vorrichtungen vergrößert.

In einer besonders bevorzugten Ausführungsform der Erfindung ist zwischen dem oder jedem Klemmelement und der oder jeder Verstelleinheit eine zusätzliche Verstelleinheit angeordnet, durch die das Falten bzw. Zusammenlegen zur Verbesserung der Verwendungszwecke unterstützt wird.

Vorteilhafterweise können auch wenigstens zwei Rahmenanordnungen an der Hubsäule angeordnet sein. Dadurch erhöht sich die Leistungsfähigkeit der Vorrichtung erheblich, da zwei Produktionslinien an die erfindungsgemäße Vorrichtung angeschlossen werden können. Des weiteren führt diese Anordnung aber auch zur Reduzierung der Herstellkosten, da an einer gemeinsamen Hubsäule mehrere voll funktionsfähige und autark einsetzbare Rahmenanordnungen sind. Im übrigen ist eine Anordnung mehrerer Rahmenanordnungen an einer Hubsäule nicht nur wartungsfreundlich sondern ermöglicht auch die Aufrechterhaltung des Betriebs bzw. der Produktion bei Ausfall einer Rahmenanordnung. Endlich ist durch die sehr kompakte Konstruktion eine sehr platzsparende Anordnung sichergestellt.

Weitere bevorzugte Ausführungsformen und vorteilhafte Merkmale der Erfindung ergeben sich aus den Unteransprüchen und der Beschreibung. Besonders bevorzugte Ausführungsformen der erfindungsgemäßen Vorrichtung werden im folgenden anhand der beigefügten Zeichnung näher erläutert. In der Zeichnung zeigt:
- Fig. 1: eine perspektivische Ansicht einer ersten Ausführungsform der erfindungsgemäßen Vorrichtung mit einem geschlossenen Karton,
- Fig. 2: eine Draufsicht auf eine Rahmenanordnung mit einem geschlossenen Karton,
- Fig. 3: eine Ansicht der Rahmenanordnung gemäß Figur 2 von unten,
- Fig. 4: eine perspektivische Ansicht einer weiteren Ausführungsform der Rahmenanordnung mit einem geschlossenen Karton,
- Fig. 5: eine Ansicht der Rahmenanordnung gemäß Figur 4 von unten,
- Fig. 6: eine perspektivische Ansicht einer weiteren Ausführungsform der Rahmenanordnung mit einem geöffneten Karton,
- Fig. 7: eine Ansicht der Rahmenanordnung gemäß Figur 6 von unten,
- Fig. 8: eine Ansicht einer weiteren Ausführungsform der Rahmenanordnung mit einem geschlossenen Karton von unten,
- Fig. 9: eine Draufsicht auf die Rahmenanordnung gemäß Figur 8 mit geöffnetem Karton,
- Fig. 10: eine perspektivische Ansicht der Rahmenanordnung gemäß Figur 9 von schräg unten ohne Karton,
- Fig. 11: eine Draufsicht auf eine weitere Ausführungsform der Rahmenanordnung mit geöffnetem Karton,
- Fig. 12: eine perspektivische Ansicht einer weiterer Ausführungsform der erfindungsgemäßen Vorrichtung mit zwei um 180° versetzten Rahmenanordnungen, und
- Fig. 13: eine perspektivische Ansicht einer weiteren Ausführungsform der erfindungsgemäßen Vorrichtung mit zwei um 90° versetzten Rahmenanordnungen.

Die im folgenden beschriebenen Vorrichtungen dienen zum Greifen eines insbesondere mit Tabak befüllten Kartons. Mit den Vorrichtungen ist jedoch u.a. auch ein Verschwenken, Halten und Entleeren der Kartons sowie ein Flachlegen derselben möglich.

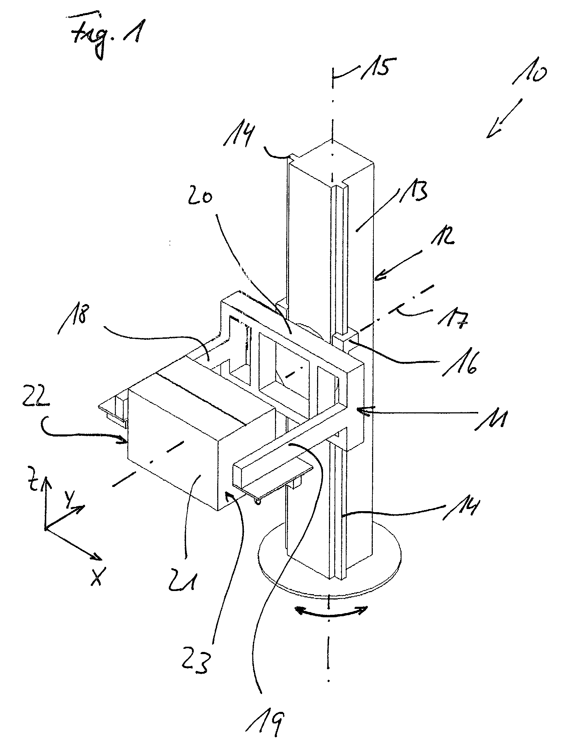

Die in der Figur 1 dargestellte Vorrichtung 10 umfaßt eine Rahmenanordnung 11, die im Bereich einer Hubsäule 12 angeordnet ist. Die Hubsäule 12 weist ein vertikales Trägerelement 13 mit Führungsschienen 14 zur Aufnahme der Rahmenanordnung 11 auf. Die Hubsäule 12 selbst ist um ihre vertikale Mittelachse 15 drehbar mittels eines nicht dargestellten Antriebs ausgebildet. Auf den Führungsschienen 14 ist die Rahmenanordnung 11 mit korrespondierenden Führungselementen 16 über einen nicht dargestellten Antrieb entlang der Mittelachse 15 auf- und abbewegbar. Zusätzlich ist die Rahmenanordnung 11 noch um eine horizontale Achse 17 dreh- bzw. schwenkbar, so daß mindestens drei Bewegungsrichtungen gewährleistet sind. Es müssen jedoch nicht sämtliche Bewegungsmöglichkeiten realisiert sein. Alternativ kann die Rahmenanordnung 11 z.B. auch drehfest an einer ortsfesten Hubsäule 12 angeordnet sein.

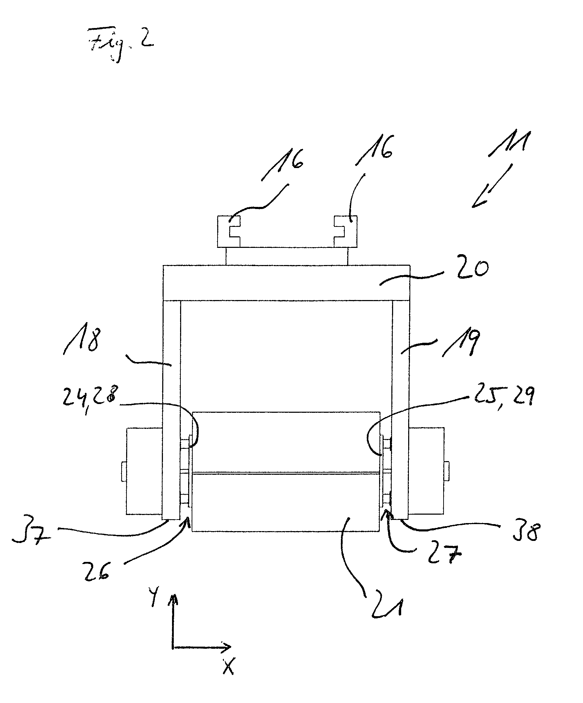

Die Rahmenanordnung 11 ist im gezeigten Ausführungsbeispiel in der Draufsicht etwa U-förmig ausgebildet (siehe insbesondere Figur 2) und umfaßt zwei einander gegenüberliegende Greifarme 18 und 19 mit parallel verlaufenden Längsachsen, wobei die Greifarme 18, 19 über einen Querträger 20 miteinander verbunden sind. Die Greifarme 18, 19 bilden mit dem Querträger 20 eine starre Einheit. Bevorzugt sind die Greifarme 18, 19 und der Querträger 20 fest miteinander verschweißt. Es sind aber auch andere, auch lösbare Verbindungen zur Bildung der Rahmenanordnung 11 möglich. Die Rahmenanordnung 11 kann auch eine andere als die U-Form aufweisen. Entscheidend ist, daß die Greifarme 18, 19 derart angeordnet und ausgebildet sind, daß ein Karton 21 an einander gegenüberliegenden Seitenflächen 22, 23 möglichst sicher und insbesondere flächig greifbar ist.

In Figur 2 ist eine Rahmenanordnung 11 gezeigt, bei der an beiden Greifarmen 18, 19 ein Klemmelement 24, 25 sowie jeweils eine dem Klemmelement 24, 25 zugeordnete Verstelleinheit 26, 27 angeordnet ist. Die Klemmelemente 24, 25 sind üblicherweise flächige Halteplatten 28, 29, die auf der dem Karton 21 zugewandten Seite mit Fixierungselementen ausgestattet sind. Diese Fixierungselemente sind vorzugsweise als Nägel und/oder Leisten ausgebildet. Aber auch andere form- und/oder kraftschlüssig wirkende Fixierungselemente sind einsetzbar. Die Halteplatten 28, 29 sind so ausgebildet bzw. ausgerichtet, daß sie senkrecht zum Greifarm 18, 19 in der durch die Greifarme 18, 19 aufgespannten Ebene bewegbar sind. Mit anderen Worten ist jedes Klemmelement 24, 25 bzw. jede Halteplatte 28, 29 linear in Richtung des gegenüberliegenden Greifarms 18 bzw. 19 bewegbar, so daß eine flächige Anlage der Klemmelemente 24, 25 bzw. Halteplatten 28, 29 am Karton gewährleistet ist. Idealerweise verläuft die lineare Bewegung senkrecht zur Längserstreckung der Greifarme 18, 19, also in x-Richtung (siehe z.B. Figur 2).

Zur Verstellung der Halteplatten 28, 29 in eine einzige Bewegungsrichtung, nämlich senkrecht zu den Seitenflächen 22, 23 des Kartons 21, dienen die Verstelleinheiten 26, 27. Vorzugsweise ist jedem Klemmelement 24, 25 bzw. jeder Halteplatte 28, 29 eine eigene Verstelleinheit 26 bzw. 27 zugeordnet, die auch separat ansteuerbar sind. Es besteht allerdings auch die Möglichkeit, daß die Halteplatten 28, 29 eine gemeinsame Verstelleinheit aufweisen. Auch können mehrere Verstelleinheiten 26, 27 mit einer gemeinsamen Steuerung verbunden sein. Die Verstelleinheiten 26, 27 sind auf der dem Karton 21 abgewandten Seite der Halteplatten 28, 29 an dieser befestigt. Die Befestigung ist bevorzugt starr ausgebildet.

Die Verstelleinheiten 26, 27 sind bevorzugt aus einem Druckzylinder 30 sowie zwei zu beiden Seiten des Druckzylinders 30 angeordneten Linearführungen 31, 32 gebildet. Allerdings kann die Anordnung der einzelnen Elemente der Verstelleinheiten 26, 27 sowie auch die Anzahl der Druckzylinder 30 und Linearführungen 31, 32 je nach Anwendungsfall variieren. Der Druckzylinder 30 sowie die Linearführungen 31, 32 sind an einer gemeinsamen Halteplatte 33 befestigt und mit ihren Mittelachsen 34, 35, 36 parallel zueinander ausgerichtet. Die Mittelachsen 34 bis 36 verlaufen senkrecht zur Halteplatte 28 bzw. 29 und damit in der gezeigten Ausführungsform auch senkrecht zum Greifarm 18 bzw. 19 in der durch die Greifarme 18, 19 aufgespannten Ebene. Der Druckzylinder 30 ist als Druckluftzylinder ausgebildet. Es können aber auch hydraulische Druckzylinder oder andere übliche Einrichtungen zur Erzeugung einer linearen Bewegung verwendet werden.

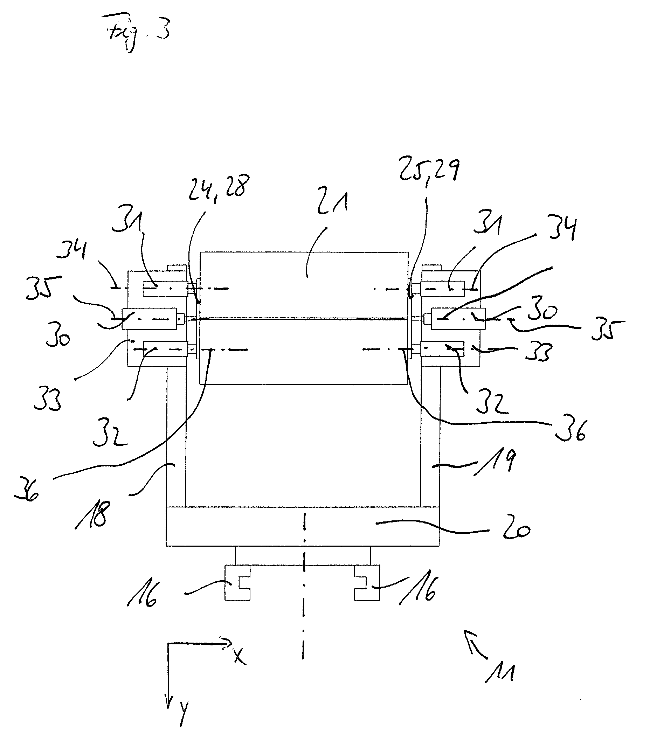

Die Verstelleinheiten 26, 27 sind in der in Figur 2 gezeigten Ausführungsform im Bereich von freien Enden 37 bzw. 38 der Greifarme 18, 19 angeordnet und liegen sich unmittelbar gegenüber, derart, daß die Mittelachsen 34 bis 36 etwa fluchtend (siehe z.B. Figur 3) ausgerichtet sind. Die Verstelleinheiten 26, 27 können jedoch auch an anderen Positionen im Bereich der Greifarme 18, 19 angeordnet sein und insbesondere versetzt zu einander, so daß die Mittelachsen 34 bis 36 der einander gegenüberliegenden Druckzylinder 30 und der Linearführungen 31, 32 versetzt zueinander und/oder in einem Winkel verlaufen.

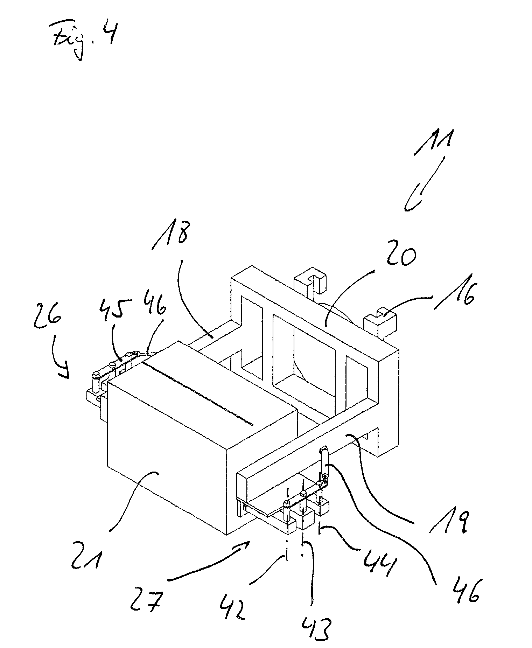

In einer weiteren Ausführungsform z.B. gemäß Figur 4 ist jede Verstelleinheit 26, 27 verschwenkbar ausgebildet. In bevorzugter Weise weist hierzu jeder Druckzylinder 30 und jede Linearführung 31, 32 einen Drehteller 39, 40, 41 auf. Mittels der Drehteller 39 bis 41 sind der Druckzylinder 30 und die Linearführungen 31, 32 separat um eine parallel zur Mittelachse 15 der Hubsäule 12 verlaufende Drehachse 42, 43, 44 verschwenkbar. Zur Synchronisation der Schwenkbewegung von Druckzylinder 30 einerseits und Linearführungen 31, 32 andererseits, d.h. paralleles Verschwenken von Druckzylinder 30 und Linearführungen 31, 32 um denselben Winkel, sind diese über ein Verbindungselement 45, das als Stange, Flachprofil oder dergleichen ausgebildet sein kann, miteinander verbunden. Das Verbindungselement 45 ist seinerseits mit einem Betätigungsorgan 46 verbunden. Das Betätigungsorgan 46 kann als Druck- oder Zugzylinder ausgebildet sein. Andere übliche Betätigungselemente sind ebenfalls verwendbar. Das Betätigungsorgan 46 ist am Greifarm 18 bzw. 19 befestigt.

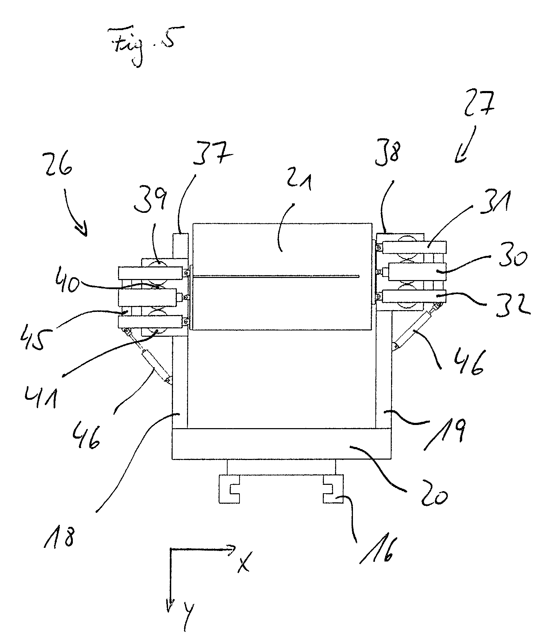

Der Druckzylinder 30 und die Linearführungen 31, 32 sind an ihren dem Karton 21 abgewandten Ende an dem Verbindungselement 45 drehfest befestigt. An den dem Karton 21 zugewandten Enden sind der Druckzylinder 30 und die Linearführungen 31, 32 gelenkig mit der Halteplatte 28 bzw. 29 verbunden, um eine Schwenkbewegung der Halteplatten 28, 29 gegenüber den Verstelleinheiten 26, 27 zu gewährleisten. Bei zwei einander gegenüberliegenden Verstelleinheiten 26, 27 (siehe z.B. Figur 5) sind diese versetzt zueinander an den Greifarmen 18, 19 angeordnet. Das bedeutet, daß eine Verstelleinheit 26 z.B. mit einem Abstand zum freien Ende 37 am Greifarm 18 angeordnet ist, während die andere Verstelleinheit 27 unmittelbar im Bereich des freien Endes 38 des Greifarms 19 angeordnet ist. Andere Anordnungen sind jedoch auch möglich. Die Verstelleinheiten 26, 27 sind grundsätzlich gegensinnig bzw. gegenläufig verschwenkbar, so daß eine Relativbewegung zwischen den beiden Halteplatten 28, 29 parallel zu den Seitenflächen 22, 23 des Kartons 21 bzw. im Falle einer nur einseitig vorhandenen Verstelleinheit 26 oder 27 zwischen einer Halteplatte 28 oder 29 und dem gegenüberliegenden Greifarm 18 oder 19 erzeugt werden kann. Dies kann z.B. durch die Verwendung eines Zugzylinders an einer Verstelleinheit 26 oder 27 und der Verwendung eines Druckzylinders an der anderen Verstelleinheit 26 bzw. 27 erreicht werden. Auch können die Betätigungsorgane 46 einander diagonal gegenüberliegen, so daß beispielsweise zwei Druckzylinder verwendet werden können, wobei der eine Druckzylinder die Halteplatte 28 in Richtung des Querträgers 20 und der andere Druckzylinder die Halteplatte 29 weg von dem Querträger 20 bewegt.

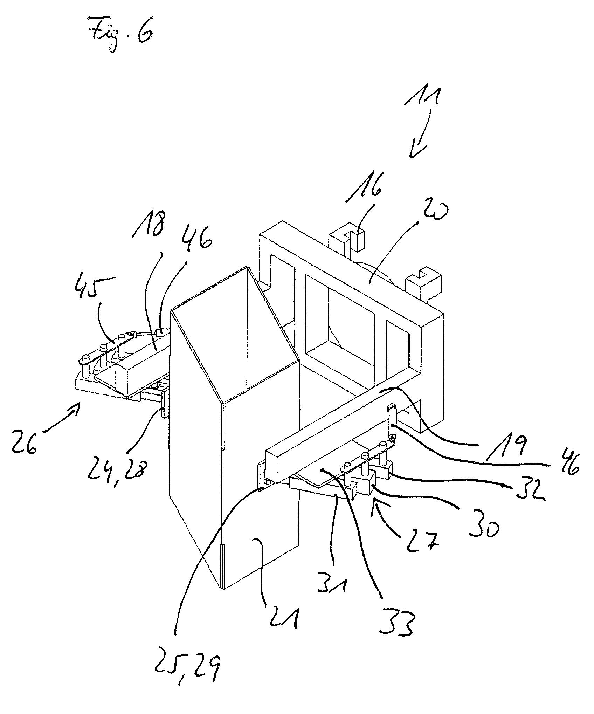

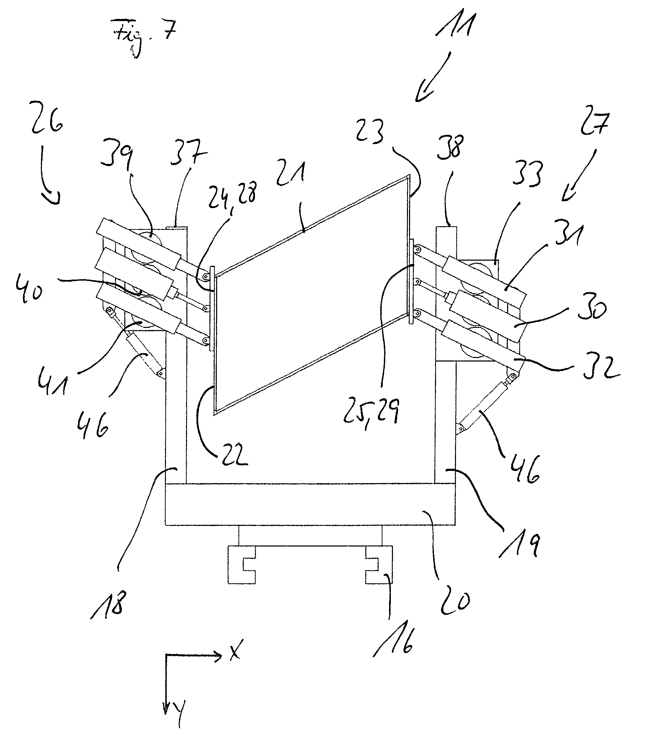

Der Druckzylinder 30 zum Zustellen der Halteplatten 28, 29 in x-Richtung und die Betätigungsorgane 46 zum Bewegen der Halteplatten 28, 29 in y-Richtung sind an eine gemeinsame Steuerung angeschlossen, um die Bewegungen in x-Richtung und y-Richtung aufeinander abzustimmen. Wie insbesondere aus den Figuren 6 und 7 ersichtlich, ist die Rahmenanordnung 11 durch die Verschwenkbarkeit der Verstelleinheiten 26, 27 insgesamt bzw. deren Einzelelementen (Druckzylinder 30, Linearführungen 31, 32) neben dem Greifen und Halten der Kartons 21 auch dazu geeignet, die Kartons 21 nach dem Entleeren zusammen zu falten, da neben der Zustellbewegung in x-Richtung eine überlagerte Bewegung in y-Richtung gewährleistet ist, was zu einer Relativbewegung der Seitenflächen 22, 23 parallel und gegenläufig zueinander sowie einer Bewegung aufeinander zu führt, wodurch der Karton 21 faltbar ist.

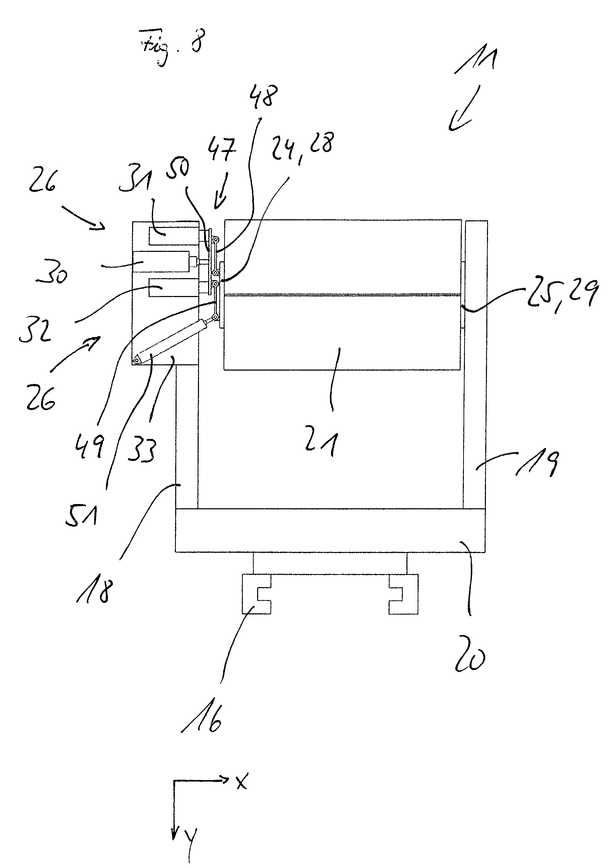

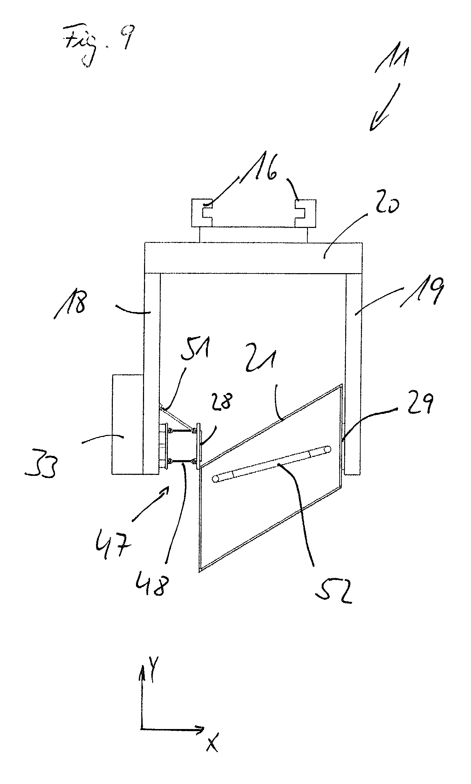

Aus den Figuren 8 und 9 geht ein weiteres bevorzugtes Ausführungsbeispiel hervor, bei dem zwischen dem Klemmelement 24 bzw. der Halteplatte 28 und der Verstelleinheit 26 eine zusätzliche Verstelleinheit 47 angeordnet ist. Die Verstelleinheit 47 ist bevorzugt als parallelogrammartige Einrichtung, z.B. als Gestänge mit insgesamt vier Gelenkpunkten ausgebildet. Zwei Gelenkstangen oder auch Scharniere 48, 49 sind gelenkig an der dem Karton 21 abgewandten Seite der Halteplatte 28 angeordnet. An den anderen Enden der Scharniere 48, 49 sind diese an einer Stützplatte 50 gelenkig angeordnet, wobei die Stützplatte 50 wiederum an der Verstelleinheit 26 befestigt ist. Das Parallelogramm wird im gezeigten Beispiel somit aus der Stützplatte 50 sowie der Halteplatte 28 und den Scharnieren 48, 49 gebildet.

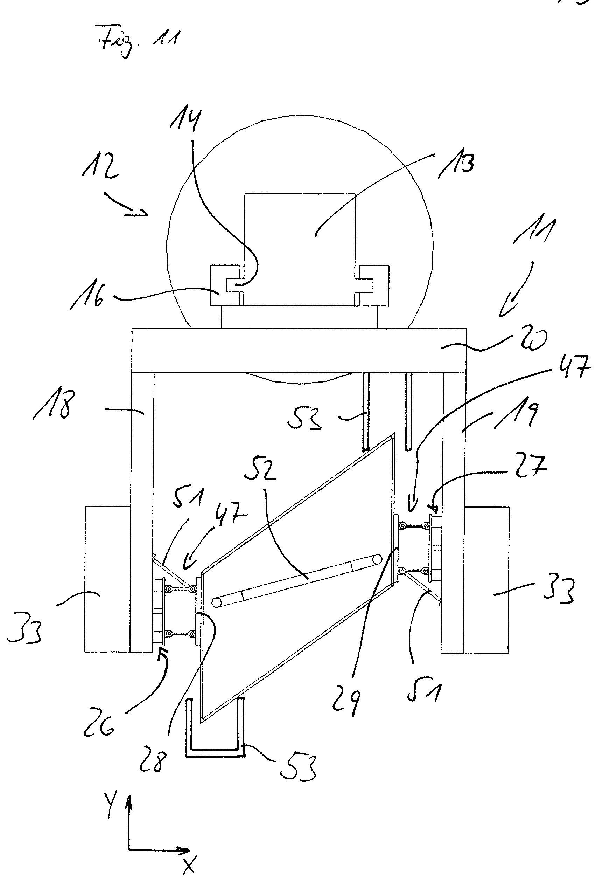

Im Bereich der Verstelleinheit 47 ist ein Betätigungsorgan 51 angeordnet, das zur Betätigung der Verstelleinheit 47 dient. Das Betätigungsorgan 51 kann als Druck - oder Zugzylinder ausgebildet sein und ist vorzugsweise an eine gemeinsame Steuerung mit dem Druckzylinder 30 der Verstelleinheit 26 angeschlossen. Im eingefahrenen Zustand der Verstelleinheit 47 (siehe Figur 8) liegen die Scharniere 48, 49 parallel zur Halteplatte 28 und zur Stützplatte 50. Die Halteplatte 28 ist dabei versetzt zur Stützplatte 50 angeordnet. Das Betätigungsorgan 51 ist als Druckzylinder ausgebildet und an der Halteplatte 28 und/oder einem der Scharniere 48, 49 befestigt. Der Karton 21 ist zwischen der Halteplatte 28 und der unmittelbar am Greifarm 19 angebrachten Halteplatte 29 eingeklemmt. Die Klemmkraft in x-Richtung wird durch die Verstelleinheit 26 aufgebracht. Nach dem Entleeren des Kartons 21 wird dieser durch Betätigung der Verstelleinheit 47 zusammengefaltet bzw. flachgelegt, indem eine Relativbewegung zwischen den beiden Seitenflächen 22, 23 des Kartons 21 herbeigeführt wird, wobei sich die Seitenflächen 22, 23 dabei gleichzeitig aufeinander zu bewegen. Diese Relativbewegung läßt sich zum einen zwischen einer beweglichen Klemmplatte 28 und einer stationären Klemmplatte 29 (siehe Figur 9) erzeugen. Zum anderen kann die Relativbewegung aber auch zwischen zwei beweglichen Klemmplatten 28, 29 (siehe Figur 11) bewirkt werden.

Bei der Ausführungsform gemäß Figur 11 sind die Verstelleinheiten 26, 27 mit der jeweiligen Verstelleinheit 47 versetzt zueinander angeordnet. Beide Betätigungsorgane 51 sind als Druckzylinder ausgebildet. Im Bereich der Rahmenanordnung 11 ist zusätzlich ein Anschlag 52 angeordnet, der als stationärer Deckelöffner ausgebildet ist. Mit diesem Anschlag 52 sind die Deckel des Kartons 21 zu öffnen, indem der Anschlag 52 in den auf der einen Seite geöffneten Karton 21 eintaucht. Dies kann z.B. durch eine Aufwärtsbewegung der Rahmenanordnung 11 erfolgen. Des weiteren sind im Bereich der Rahmenanordnung 11 bzw. zwischen den Greifarmen 18,19 vorzugsweise zwei U-förmige Anschläge 53 angeordnet, die einerseits zur Führung des gefalteten Kartons 21 dienen und andererseits den Karton 21 beim Zurückbewegen der Klemmelemente 24, 25 bzw. der Halteplatten 28, 29 bzw. beim Herausziehen der Nägel 21 aus dem Karton 21 halten, um ein erneutes Auffalten des Kartons 21 zu verhindern.

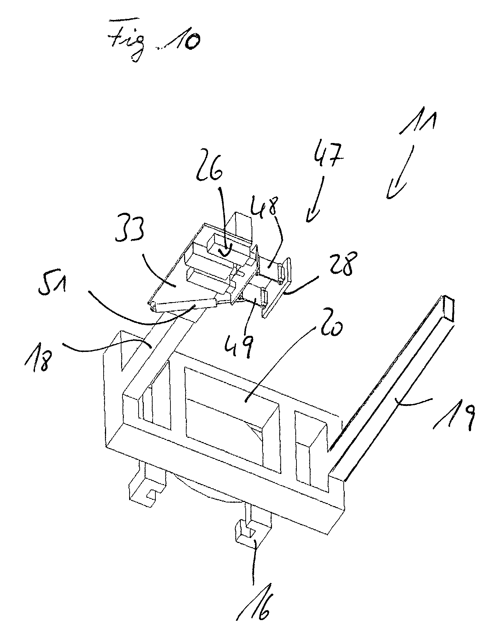

Grundsätzlich ist es auch möglich, wie z.B. in den Figuren 8 bis 10 gezeigt, daß Klemmelemente 24, 25 sowie Verstelleinheiten 26, 27, 47 in unterschiedlichen Kombinationen lediglich an einem Greifarm 18 oder 19 angeordnet sind (siehe z.B. Figur 8). Die erfindungsgemäße Vorrichtung 10 umfaßt jedoch auch Ausführungsformen, in denen lediglich Teile der zuvor beschriebene Ausführungsformen verwendet werden.

Im folgenden wird ein Arbeitstakt einer der erfindungsgemäßen Vorrichtungen 10 beschrieben:
Die Rahmenanordnung 11 wird entlang der Hubsäule 12 zum Greifen eines Kartons 21 von der Aufgabe nach unten gefahren. Mittels der Klemmelemente 24, 25 bzw. der Halteplatten 28, 29 wird der Karton 21 gegriffen und eine untere (nicht dargestellte) Deckelhalterung ausgefahren. Die Rahmenanordnung 11 fährt mit dem Karton 21 entlang der Hubsäule 12 wieder aufwärts. Anschließend wird die Rahmenanordnung 11 mit dem Karton 21 um etwa 90° um die Mittelachse 15 der Hubsäule 12 in Richtung eines Transportbandes verschwenkt. Von einer Bedienperson werden Verpackungsmaterialien, wie z.B. den Karton umschließende Bänder sowie üblicherweise innerhalb des Kartons 21 zur Abdeckung vorhandene Papiereinlagen gelöst bzw. entnommen. Danach wird eine obere (ebenfalls nicht dargestellte) Deckelhalterung ausgefahren. Zur Vorbereitung der Entleerung des Kartons 21 wird die Rahmenanordnung 11 entlang der Hubsäule 12 geringfügig nach oben verfahren und um 180° um die horizontale Dreh-Achse 17 verschwenkt. Durch Wegschwenken der unteren Deckelhalterung fällt der Tabak durch Schwerkraft aus dem Karton 21. Anschließend lösen sich die Haltepallten 28, 29 wieder vom Karton, indem sie zurück bewegt werden, und der Karton 21 wird einer nachgeordneten Vorrichtung zum Flachlegen zugeführt.

Weist die erfindungsgemäße Vorrichtung jedoch verschwenkbare Verstelleinheiten 26, 27 bzw. eine zusätzliche Verstelleinheit 47 auf, kann der Karton 21 auch unmittelbar durch die Vorrichtung 10 selbst gefaltet werden. Hierzu wird zunächst der obere Deckelhalter zurück geklappt. Die unten befindlichen, quasi frei hängenden Deckel bleiben nach dem Entleeren geöffnet. Durch Betätigung der Druckzylinder 30 bzw. Betätigungsorgane 46 werden die zuvor in einem rechten Winkel zueinander bzw. aneinander liegenden Seitenwände des Kartons 21 vorgespannt, so daß die Seitenwände dann mit einem Winkel kleiner bzw. größer 90° - also eine Raute bildend - aneinander liegen. Mit der Bildung einer derartigen Raute sind die Deckel bei der nachfolgenden Drehung der Rahmenanordnung um 180° um die Achse 17 gegen Zuklappen gesichert. Der leere Karton 21 mit den unten geöffneten Deckeln wird um 180° um die Achse 17 sowie um einen Betrag um die Mittelachse 15 geschwenkt, und zwar unmittelbar unter den stationären Deckelöffner. Die Rahmenanordnung 11 fährt nun mit dem Karton 21 nach oben, so daß der Deckelöffner in den Karton 21 eintaucht und die noch geschlossenen Deckel aufstößt. Sobald der Deckelöffner die Deckel geöffnet hat, kann es passieren, daß der Karton 21 allein durch die Vorspannung in sich zusammen fällt und in eine unter der Rahmenanordnung befindliche Lagerposition rutscht.

Allerdings wird der an beiden Stirnseiten geöffnete Karton 21 noch durch gegenläufige Relativbewegung der Klemmelemente 24, 25 in y-Richtung einerseits und die Zustellung aufeinander zu in x-Richtung andererseits über die Diagonale gefaltet. Nachdem der Karton 21 durch Freigabe durch die Klemmelemente 24, 25 in einen Kartonspeicher gefallen ist, fährt die Rahmenanordnung 11 zurück in ihre Ausgangsposition. Möglicherweise ist zum Lösen der Klemmelemente 24, 25 bzw. der daran befindlichen Nägel aus dem Karton 21 eine Bewegung gegen vorzugsweise U-förmige Anschläge 53 zweckmäßig. Die Anschläge 53 verhindern einerseits das nicht gewünschte Auffalten des Kartons 21 und bilden gleichzeitig ein Widerlager für den Karton, so daß die Nägel beim Zurückziehen sicher aus dem Karton 21 gezogen werden.

Grundsätzlich wird das Greifen, Halten, Schwenken, Entleeren und auch Falten des Kartons 21 für alle in Frage kommenden Ausführungsformen nach demselben gerade beschriebenen Verfahrensprinzip durchgeführt, allerdings angepaßt an die konstruktiven Unterschiede.

Um den Karton 21 einerseits zu greifen und andererseits nach dem Entleeren auch zu falten, sind unterschiedliche Drücke der Druckzylinder bzw. Betätigungsorgane 30 und/oder 46 und/oder 51 erforderlich. Zum Halten eines vollen Kartons 21, der üblicherweise ca. 200kg wiegt, ist ein Druck von etwa drei bis vier bar erforderlich. Sobald der Tabak aus dem Karton 21 gefallen ist, wird der Druck auf Atmosphärendruck bzw. geringfügig höheren Druck reduziert, um einerseits den Karton 21 nicht zu beschädigen, andererseits aber ein geringfügiges Verkanten des Kartons 21 zu erreichen. Durch diese auf den Karton aufgebrachte Vorspannung wird das spätere Falten unterstützt, da der Karton 21, sobald er an beiden Stirnseiten geöffnet wird, aufgrund seiner instabilen bzw. labilen Gleichgewichtslage in sich zusammenfällt.

Die mit einer solchen Vorrichtung 10 erreichbare Leistung, also z.B. kg Tabak pro Stunde bzw. Anzahl Kartons pro Stunde, wird durch die Taktzeit bestimmt. Um also die Leistung zu steigern, sind üblicherweise mehrere Einzelvorrichtungen erforderlich, was jedoch die Auspackkosten steigert, den Platzbedarf erhöht und die Störanfälligkeit heraufsetzt.

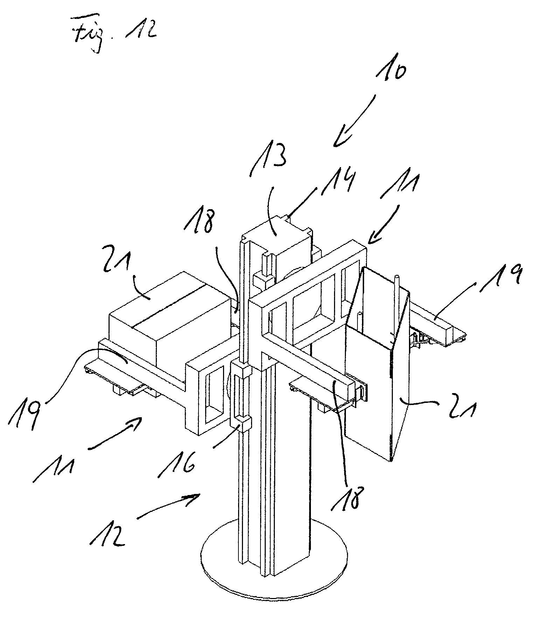

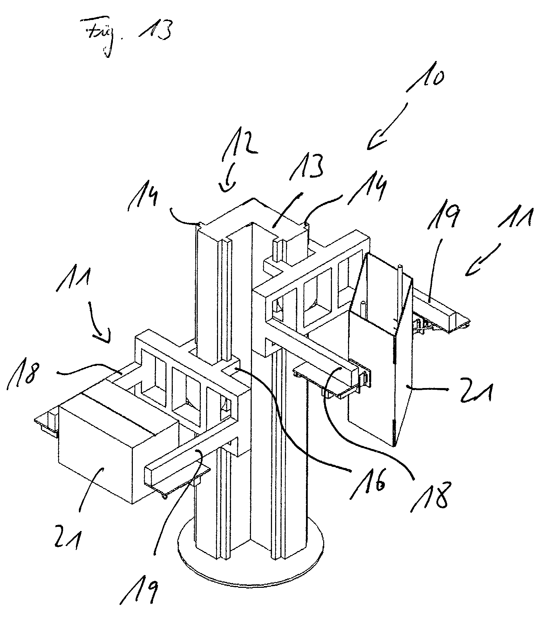

Um hier eine effektivere Lösung vorzuschlagen sind z.B. gemäß Figur 12 zwei Rahmenanordnungen 11 an einer gemeinsamen Hubsäule 12 angeordnet. Es können jedoch auch drei oder vier solcher Rahmenanordnungen 11 an einer Hubsäule 12 angeordnet sein. Im Beispiel gemäß Figur 12 sind die beiden Rahmenanordnungen 11 um 180° versetzt zueinander an der Hubsäule 12 angeordnet. Besonders bevorzugt ist die Anordnung von zwei um 90° versetzten Rahmenanordnungen 11, wie in Figur 13 dargestellt. In einem solchen Fall ist die Hubsäule 12 bevorzugt als L-Profil ausgebildet, um platzsparend sämtliche Bewegungen jeder Rahmenanordnung zu gewährleisten. Auch sind die einzelnen Rahmenanordnungen 11 unabhängig voneinander betätigbar, so daß verschiedene Bearbeitungsvorgänge parallel ausgeführt werden können.

Durch die Anordnung mehrerer Rahmenanordnungen 11 ist eine Taktreduzierung gewährleistet, da mehrere der zuvor geschilderten Arbeitsschritte eines Taktes parallel durchgeführt werden können. Damit läßt sich die Leistung erheblich steigern. Auch können mit einer solchen Vorrichtung 10 mehrere Produktionsstränge bedient werden, was zu einer Verringerung des Platzbedarfs führt und im Falle eines Ausfalls einer Rahmenanordnung den Produktionsfluß aufrecht erhält.

## Patentansprüche

1. Vorrichtung zum Greifen eines insbesondere mit Tabak befüllten Kartons (21), umfassend eine Rahmenanordnung (11), die in vertikaler Richtung auf- und abbewegbar an einer Hubsäule (12) angeordnet ist, die ihrerseits drehbar um ihre vertikale Mittelachse (15) ausgebildet ist, wobei die Rahmenanordnung (11) zwei einander gegenüberliegende Greifarme (18, 19) aufweist, mittels der der Karton (21) an einander gegenüberliegenden Seitenflächen (22, 23) greifbar ist, **dadurch gekennzeichnet, daß** die Rahmenanordnung (11) starr mit feststehenden Greifarmen (18, 19) ausgebildet ist und im Bereich mindestens eines Greifarms (18, 19) mindestens ein Klemmelement (24, 25) sowie eine Verstelleinheit (26, 27) zur linearen Bewegung des Klemmelementes (24, 25) in Richtung des gegenüberliegenden Greifarms (18, 19) angeordnet ist.

2. Vorrichtung nach Anspruch 1, **dadurch gekennzeichnet, daß** die Rahmenanordnung (11) um eine horizontale Achse schwenkbar bzw. drehbar ausgebildet ist.

3. Vorrichtung nach Anspruch 1 oder 2, **dadurch gekennzeichnet, daß** das oder jedes Klemmelement (24, 25) senkrecht zum Greifarm (18, 19) in der durch die Greifarme (18, 19) aufgespannten Ebene bewegbar ist.

4. Vorrichtung nach einem der Ansprüche 1 bis 3, **dadurch gekennzeichnet, daß** an beiden Greifarmen (18, 19) auf einander gegenüberliegenden Seiten mindestens ein Klemmelement (24, 25) vorgesehen ist.

5. Vorrichtung nach einem der Ansprüche 1 bis 4, **dadurch gekennzeichnet, daß** jedes Klemmelement (24, 25) eine separate Verstelleinheit (26, 27) aufweist.

6. Vorrichtung nach Anspruch 5, **dadurch gekennzeichnet, daß** die Verstelleinheiten (26, 27) eine gemeinsame Steuerung aufweisen.

7. Vorrichtung nach einem der Ansprüche 1 bis 6, **dadurch gekennzeichnet, daß** jedes Klemmelement (24, 25) eine Halteplatte (28, 29) mit auf der dem Karton (21) zugewandten Seite angeordneten Nägeln und/oder Leisten umfaßt.

8. Vorrichtung nach Anspruch 7, **dadurch gekennzeichnet, daß** jede Verstelleinheit (26, 27) auf der dem Karton (21) abgewandten Seite der Halteplatte (28, 29) an dieser befestigt ist.

9. Vorrichtung nach einem der Ansprüche 1 bis 8, **dadurch gekennzeichnet, daß** eine oder jede Verstelleinheit (26, 27) verschwenkbar ausgebildet ist.

10. Vorrichtung nach einem der Ansprüche 5 bis 9, **dadurch gekennzeichnet, daß** einander gegenüberliegende Verstelleinheiten (26, 27) in Längsrichtung der Greifarme (18, 19) gegenläufig verstellbar sind.

11. Vorrichtung nach einem der Ansprüche 1 bis 10, **dadurch gekennzeichnet, daß** jede Verstelleinheit (26, 27) aus einem Druckzylinder (30) sowie mindestens einer Linearführung (31, 32) gebildet ist.

12. Vorrichtung nach Anspruch 11, **dadurch gekennzeichnet, daß** die Mittelachsen (34, 35, 36) des Druckzylinders (30) und jeder Linearführung (31, 32) senkrecht zum Greifarm (18, 19) in der durch die Greifarme (18, 19) aufgespannten Ebene verlaufen.

13. Vorrichtung nach Anspruch 11 oder 12, **dadurch gekennzeichnet, daß** jeder Druckzylinder (30) und jede Linearführung (31, 32) einen Drehteller ( 39, 40, 41) zur Verschwenkung um eine parallel zur Mittelachse (15) der Hubsäule (12) verlaufende Drehachse (42, 43, 44) aufweisen.

14. Vorrichtung nach einem der Ansprüche 11 bis 13, **dadurch gekennzeichnet, daß** eine oder jede Halteplatte (28, 29) auf der dem Karton (21) abgewandten Seite verschwenkbar mit der Verstelleineinheit (26, 27) bzw. mit dem Druckzylinder (30) und den Linearführungen (31, 32) verbunden ist.

15. Vorrichtung nach einem der Ansprüche 11 bis 14, **dadurch gekennzeichnet, daß** der Druckzylinder (30) und die Linearführungen (31, 32) jeder Verstelleinheit (26, 27) an ihrem der Halteplatte (28, 29) abgewandten Ende über ein Verbindungselement (45) miteinander verbunden sind.

16. Vorrichtung nach Anspruch 15, **dadurch gekennzeichnet, daß** im Bereich des Verbindungselementes (45) jeder Verstelleinheit (26, 27) mindestens ein Betätigungsorgan (46) zur Betätigung der Verstelleinheit (26, 27) angeordnet ist.

17. Vorrichtung nach Anspruch 16, **dadurch gekennzeichnet, daß** der Druckzylinder (30) jeder Verstelleinheit (26, 27) und das Betätigungsorgan (46) zum Betätigen des Verbindungselementes (45) eine gemeinsame Steuerung aufweisen.

18. Vorrichtung nach einem der Ansprüche 1 bis 17, **dadurch gekennzeichnet, daß** die Klemmelemente (24, 25) und/oder die Verstelleinheiten (26, 27) an den einander gegenüberliegenden Greifarmen (18, 19) versetzt zueinander angeordnet sind.

19. Vorrichtung nach einem der Ansprüche 1 bis 18, **dadurch gekennzeichnet, daß** zwischen dem oder jedem Klemmelement (24, 25) und der oder jeder Verstelleinheit (26, 27) eine zusätzliche Verstelleinheit (47) angeordnet ist.

20. Vorrichtung nach Anspruch 19, **dadurch gekennzeichnet, daß** jede zusätzliche Verstelleinheit (47) als parallelogrammartige Einrichtung ausgebildet ist.

21. Vorrichtung nach Anspruch 20, **dadurch gekennzeichnet, daß** die Einrichtung zwischen der dem Karton (21) abgewandten Seite der Halteplatte (28, 29) und einer weiteren Stützplatte (50), die an der Verstelleinheit (26, 27) befestigt ist, angeordnet ist.

22. Vorrichtung nach einem der Ansprüche 19 bis 21, **dadurch gekennzeichnet, daß** im Bereich der zusätzlichen Verstelleinheit (47) bzw. der Einrichtung mindestens ein Betätigungsorgan (51) zur Betätigung der Einrichtung angeordnet ist.

23. Vorrichtung nach Anspruch 22, **dadurch gekennzeichnet, daß** sämtliche Druckzylinder (30) und sämtliche Betätigungsorgane (46, 51) eine gemeinsame Steuerung aufweisen.

24. Vorrichtung nach einem der Ansprüche 1 bis 23, **dadurch gekennzeichnet, daß** wenigstens zwei Rahmenanordnungen (11) an der Hubsäule (12) angeordnet sind.

25. Vorrichtung nach Anspruch 24, **dadurch gekennzeichnet, daß** zwei Rahmenanordnungen (11) um 90° versetzt zueinander an der Hubsäule (12) angeordnet sind.

26. Vorrichtung nach Anspruch 24 oder 25, **dadurch gekennzeichnet, daß** die Rahmenanordnungen (11) unabhängig voneinander betätigbar sind.
